# EUROPÄISCHE PATENTSCHRIFT

(11) **EP 2 084 199 B1**
(45) Veröffentlichungstag und Bekanntmachung des Hinweises auf die Patenterteilung: **03.10.2018**
(21) Anmeldenummer: 07821779.1
(22) Anmeldetag: 24.10.2007
(51) Int. Cl.: C08G 18/10, C08G 18/80, C09J 163/00

(54) **BLOCKIERTE POLYURETHANPREPOLYMERE UND HITZEHÄRTENDE EPOXIDHARZZUSAMMENSETZUNGEN**
BLOCKED POLYURETHANE PREPOLYMERS AND HEAT CURING EPOXY RESIN COMPOSITIONS
PRÉPOLYMÈRES DE POLYURÉTHANE BLOCQUÉS ET COMPOSITIONS DE RÉSINES D'EPOXY THERMODURCISSABLES

(30) Priorität: 24.10.2006 EP 06122863
(43) Veröffentlichungstag der Anmeldung: 05.08.2009
(73) Patentinhaber: Sika Technology AG, 6340 Baar (CH)
(72) Erfinder: KRAMER, Andreas, 8006 Zürich (CH); FINTER, Jürgen, 79102 Freiburg (DE); RHEINEGGER, Urs, 8105 Regensdorf (CH); SCHULENBURG, Jan Olaf, 30900 Wedemark (DE)
(74) Vertreter: Sika Patent Attorneys
(86) Internationale Anmeldenummer: PCT/EP2007/061416
(87) Internationale Veröffentlichungsnummer: WO 2008/049857

(56) Entgegenhaltungen:
- EP-A- 0 338 985
- EP-A- 0 600 314
- WO-A-2005/007720
- GB-A- 2 314 085
- US-A- 6 153 709

## Beschreibung

### Technisches Gebiet

Die Erfindung betrifft das Gebiet der Schlagzähigkeitsmodifikatoren und das Gebiet der hitzehärtenden Epoxidharzzusammensetzungen.

### Stand der Technik

Schlagzähigkeitsmodifikatoren werden schon seit langem dazu eingesetzt, um die Festigkeit von Klebstoffen bei schlagartiger Krafteinwirkung zu verbessern. Insbesondere Epoxidharzzusammensetzungen weisen generell zwar hohe mechanische Festigkeiten auf, sind jedoch sehr spröde, das heisst bei einer schlagartigen Krafteinwirkung, wie sie beispielsweise in einem Zusammenstoss von Fahrzeugen eintritt, bricht das gehärtete Epoxidharz und führt zu einer Zerstörung des Verbundes.

Flüssigkautschuke werden schon seit längerem zur Zähigkeitsmodifizierung eingesetzt. Beispielsweise wurden Flüssigkautschuke auf Basis von Acrylnitril/Butadien-Copolymeren, wie sie beispielsweise unter dem Namen Hycar® erhältlich sind, eingesetzt.

EP-B-0 338 985 beschreibt schlagzähe Epoxidharzzusammensetzungen, welche neben Flüssigkautschuken auf Basis von Acrylnitril/Butadien-Copolymeren zusätzlich auch Flüssigkautschuke auf Basis von Polyurethanprepolymere aufweisen, welche mit einem Phenol oder einem Lactam terminiert sind.

WO-A-2005/007766 offenbart Epoxidharzzusammensetzungen, welche ein Reaktionsprodukt eines Isocyanatgruppen-terminierten Prepolymers und eines Blockierungsmittels, welches ausgewählt ist aus der Gruppe Bisphenol, Phenol, Benzylalkohol, Aminophenol oder Benzylamin enthalten. Derartige Epoxidharzzusammensetzungen zeigen jedoch Schwächen in der Tieftemperaturschlagzähigkeit (<0°C) auf.

WO-A-03/093387 offenbart schlagzähe Epoxidharzzusammensetzungen, welche Addukte von Dicarbonsäuren mit Glycidylethern oder von Bis(aminophenyl)sulfon-Isomeren oder aromatischen Alkoholen mit Glycidylethern enthalten. Diese Zusammensetzungen weisen jedoch ebenfalls Defizite in der Tieftemperaturschlagzähigkeit (<0°C) auf.

WO-A-2004/055092 und WO-A-2005/007720 offenbaren Epoxidharzzusammensetzungen mit verbesserter Schlagzähigkeit, welche ein Reaktionsprodukt eines Isocyanatgruppen-terminierten Polyurethanprepolymeren mit einem Monohydroxyepoxid, enthalten. Diese Epoxidharzzusammensetzungen weisen zwar gegenüber denjenigen, welche Phenol-terminierte Polyurethanprepolymere enthalten, eine verbesserte Tieftemperaturschlagzähigkeit auf, sind aber immer noch nicht optimal.

### Darstellung der Erfindung

Aufgabe der vorliegenden Erfindung ist es daher, Schlagzähigkeitsmodifikatoren zur Verfügung zu stellen, welche gegenüber den aus dem Stand der Technik bekannten Schlagzähigkeitsmodifikatoren in Epoxidharzzusammensetzungen zu verbesserten Schlagzähigkeiten, insbesondere bei tiefen Temperaturen, führen. Überraschenderweise wurde gefunden, dass dies durch endständig blockierte Polyurethanprepolymere gemäss Anspruch 1 erreicht werden kann. Erstaunlicherweise wurde gefunden, dass mit ungleich (d.h. mit verschiedenen Blockierungsmitteln) blockierten Polyurethanprepolymeren höhere Schlagzähigkeiten als mit gleich (d.h. mit gleichem Blockierungsmittel) blockierten Polyurethanprepolymeren, wie sie aus dem Stand der Technik bekannt sind, erreicht werden können.

Die erfindungsgemässen endständig blockierten Polyurethanprepolymeren finden als Schlagzähigkeitsmodifikatoren in Epoxidharzzusammensetzungen Anwendungen.

Somit bilden hitzehärtende Epoxidharzzusammensetzungen gemäss Anspruch 5, welche mindestens ein erfindungsgemässes endständig blockiertes Polyurethanprepolymer enthalten, einen weiteren Aspekt der vorliegenden Erfindung. Diese Epoxidharzzusammensetzungen weisen eine besonders hohe Schlagzähigkeit sowohl bei Raumtemperatur als auch bei tiefen Temperaturen (-30°C bzw. -40°C) auf und eignen sich deshalb insbesondere als Rohbauklebstoffe für Fahrzeuge und sind aufgrund ihrer Schlagzähigkeit besonders crash-tauglich.

### Wege zur Ausführung der Erfindung

Die vorliegende Erfindung betrifft in einem ersten Aspekt endständig blockierte Polyurethanprepolymere der Formel (I).

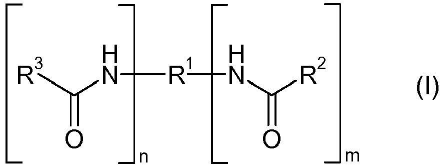

Hierbei steht R¹ für ein mit n+m Isocyanatgruppen terminiertes lineares oder verzweigtes Polyurethanprepolymer **PU1** nach dem Entfernen aller endständigen Isocyanatgruppen. Die Reste R² stehen unabhängig voneinander für eine Gruppe der Formel (II) und die Reste R³ stehen unabhängig voneinander für eine Blockierungsgruppe, welche sich bei einer Temperatur über 100°C abspaltet.

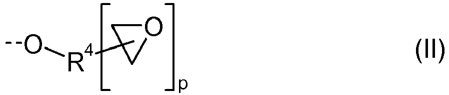

Hierbei stehen R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, und p für die Werte 1, 2 oder 3.

Schliesslich stehen n und m je für Werte zwischen 1 und 7 mit der Massgabe, dass 2 ≤ (m+n) ≤ 8 ist. Eine weitere Massgabe ist, dass R² von R³ verschieden ist. Somit ist das Polyurethanprepolymer "ungleich" blockiert.

Der Term "unabhängig voneinander" in der Definition von R², respektive R³, bedeutet, dass von m Gruppen R², respektive von n Gruppen R³, nicht alle denselben Rest darstellen müssen, sondern sie können unterschiedliche Bedeutungen aufweisen. So ist es im Extremfall möglich, dass das endständig blockierte Polyurethanprepolymer 8 voneinander verschiedene Gruppen R², bzw. R³, aufweist.

Die möglichen Blockierungsgruppen R² und R³ sind grundsätzlich sehr vielfältig und der Fachmann kennt eine breite Anzahl derartiger Blockierungsgruppen, zum Beispiel aus den Review Artikeln von Douglas A. Wick in Progress in Organic Coatings 36 (1999), 148-172 und in Progress in Organic Coatings 41 (2001), 1-83.

Als Reste R² und/oder R³ stehen insbesondere Reste, welche ausgewählt sind aus der Gruppe bestehend aus

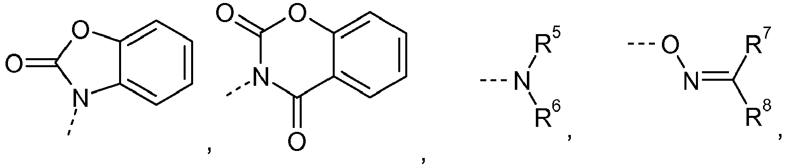

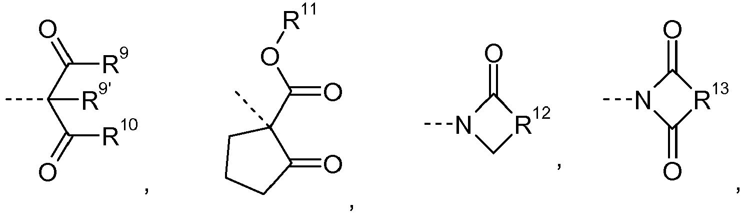

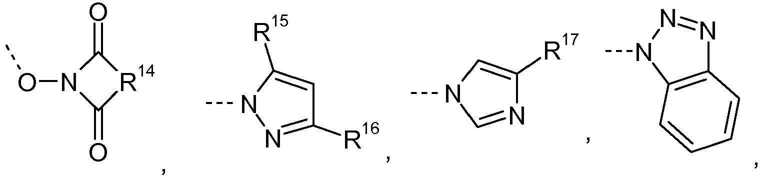

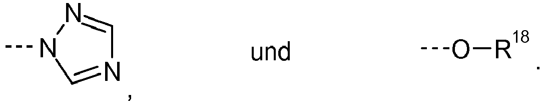

Hierbei stehen R⁵, R⁶, R⁷ und R⁸ entweder je unabhängig voneinander für eine Alkyl- oder Cycloalkyl- oder Aryl- oder Aralkyl- oder Arylalkyl-Gruppe. Oder R⁵ bildet zusammen mit R⁶, oder R⁷ zusammen mit R⁸, einen Teil eines 4- bis 7- gliedrigen Rings, welcher allenfalls substituiert ist.

Weiterhin stehen R⁹, R^{9'} und R¹⁰ je unabhängig voneinander für eine Alkyl- oder Aralkyl- oder Aryl- oder Arylalkyl-Gruppe oder für eine Alkyloxy- oder Aryloxy- oder Aralkyloxy-Gruppe und R¹¹ steht für eine Alkylgruppe.

Des Weiteren stehen R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxylgruppen aufweist.

Die gestrichelten Linien in den Formeln dieses Dokumentes stellen jeweils die Bindung zwischen dem jeweiligen Substituenten und dem dazugehörigen Molekülrest dar.

Als R¹⁸ sind insbesondere einerseits Phenole oder Bisphenole nach Entfernung einer Hydroxylgruppe zu betrachten. Als Bespiele für derartige Phenole und Bisphenole sind insbesondere Phenol, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F zu nennen.

Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.
Bevorzugt sind die Reste R² und R³ derart gewählt, dass sich die Deblockierungstemperaturen der Blockierungsgruppen R² und R³ deutlich voneinander unterscheiden. Insbesondere ist es von Vorteil, wenn die Differenz der Deblockierungstemperaturen von R² und R³ mindestens 20°C, bevorzugt mindestens 30 °C, beträgt. Dies erlaubt es gezielt mehrstufige Vernetzungsprozesse zu gestalten, welche eine Vielzahl von Möglichkeiten in Klebstoffen eröffnet.

Zudem ist es vorteilhaft, wenn die Reste R² und R³ von unterschiedlicher Klasse sind, das heisst, dass sie aus unterschiedlichen Gruppen, wie sie oben aufgezeigt sind, stammen. Beispielsweise ist es vorteilhaft, einerseits hydroxylfunktionelle Epoxide der Formel (II) und Phenole oder andererseits Phenole und Oxazolinone als Blockierungsmittel zu verwenden. Selbstverständlich sind auch alle weiteren Kombinationen der beschriebenen Blockierungsmittel, sowie ternäre oder quaternäre Mischungen von Blockierungsmitteln, denkbar.

R² stellt eine Gruppe der Formel (II) dar.

Das Polyurethanprepolymer **PU1,** auf dem R¹ basiert, lässt sich aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** herstellen.

In der gesamten hier vorliegenden Schrift werden mit der Vorsilbe "Poly" in "Polyisocyanat", "Polyol", "Polyphenol" und "Polymerkaptan" Moleküle bezeichnet, die formal zwei oder mehr der jeweiligen funktionellen Gruppen enthalten.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** geeignet sind Polyole, beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 1000 - 30'000 Dalton, Polyoxybutylendiole und -triole, Polyoxypropylendiole und -triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hycar® CTBN von Nanoresins AG, Deutschland) und Epoxiden oder Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere **Q_{PM}** di- oder höherfunktioneller Polyole mit OH-Equivalentsgewichten von 300 bis 6000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Im Weiteren können als Polymere **Q_{PM}** auch di- oder höherfunktionelle aminoterminierte Polyethylenether, Polypropylenether, wie sie zum Beispiel unter dem Namen Jeffamine® von Huntsman vertrieben werden, Polybutylenether, Polybutadiene, Butadien/Acrylnitril-Copolymere, wie sie zum Beispiel die unter dem Namen Hycar® ATBN von Nanoresins AG, Deutschland vertrieben werden, sowie weitere aminoterminierte synthetische Kautschuke oder Gemische der genannte Komponenten verwendet werden.

Für gewisse Anwendungen sind als Polymere **Q_{PM}** insbesondere Hydroxyl-Gruppen aufweisende Polybutadiene oder Polyisoprene oder deren partiell oder vollständig hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (VI) oder (VII) 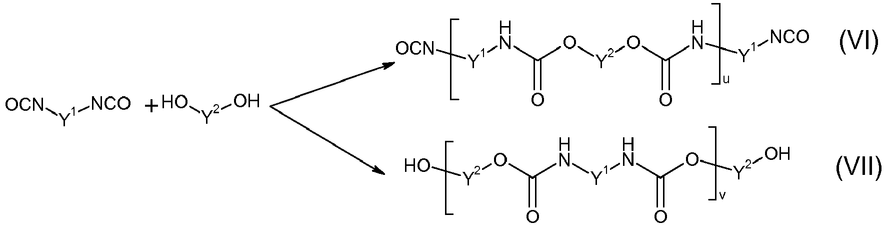 Die Reste Y¹ und Y² stellen einen divalenten organischen Rest dar und die Indizes u und v variieren je nach Stöchiometrieverhältnis von 1 bis typischerweise 5.

Diese Spezies der Formel (VI) oder (VII) können dann wiederum weiterreagiert werden. So kann beispielsweise aus der Spezies der Formel (VI) und einem Diol mit einem divalenten organischen Rest Y³ ein kettenverlängertes Polyurethanprepolymer **PU1** der folgenden Formel gebildet werden:

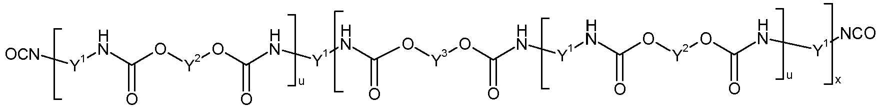

Aus der Spezies der Formel (VII) und einem Diisocyanat mit einem divalenten organischen Rest Y⁴ kann ein kettenverlängertes Polyurethan-prepolymer **PU1** der folgenden Formel gebildet werden:

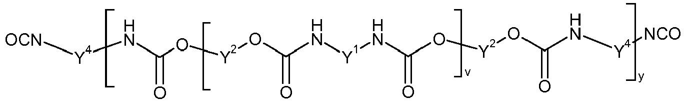

Die Indizes x und y variieren je nach Stöchiometrieverhältnis von 1 bis typischerweise 5, und sind insbesondere 1 oder 2.

Weiterhin kann auch die Spezies der Formel (VI) mit der Spezies der Formel (VII) umgesetzt werden, so dass ein NCO Gruppen aufweisendes kettenverlängertes Polyurethanprepolymer **PU1** entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanprepolymeren **PU1** generell und bei den kettenverlängerten Polyurethanprepolymeren im Speziellen ist vorteilhaft darauf zu achten, dass die Prepolymere nicht zu hohe Viskositäten aufweisen, insbesondere wenn höher funktionelle Verbindungen für die Kettenverlängerung eingesetzt werden, denn dies kann deren Umsetzung zu den Polymeren der Formel (I) beziehungsweise die Applikation der Zusammensetzung erschweren.

Als Polymere **Q_{PM}** bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypoly-alkylenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanprepolymeren **PU1** nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2.0 bis 3.5 sowie alle Isomeren der vorgenannten Verbindungen.

Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

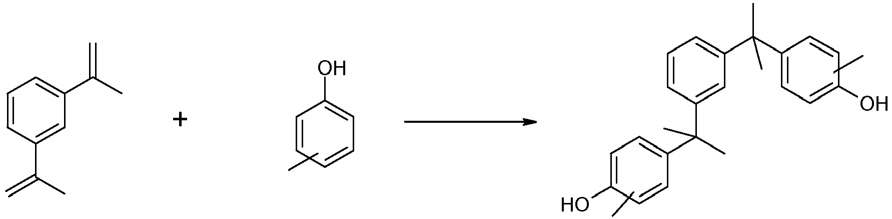

Besonders bevorzugt sind schwerflüchtige Bisphenole. Als meist bevorzugt gelten Bisphenol-M, Bisphenol-S und 2,2'-Diallyl-Bisphenol-A.

Bevorzugt weist das **Q_{PP}** 2 oder 3 phenolische Gruppen auf.

In einer ersten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers **PU1** erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

In einer zweiten Ausführungsform wird das Polyurethanprepolymer **PU1** aus mindestens einem Diisocyanat oder Triisocyanat sowie aus einem, gegebenenfalls substituierten, Polyphenol **Q_{PP}** hergestellt. Die Herstellung des Polyurethanprepolymers **PU1** erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanprepolymers **PU1** aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.

In einem ersten Verfahren, "Eintopfverfahren" genannt, wird eine Mischung von mindestens einem Polyphenol **Q_{PP}** und mindestens einem Polymeren **Q_{PM}** mit mindestens einem Diisocyanat oder Triisocyanat in einem Isocyanatüberschuss umgesetzt.

In einem zweiten Verfahren, "2-Schrittverfahren I" genannt, wird mindestens ein Polyphenol **Q_{PP}** mit mindestens einem Diisocyanat oder Triisocyanat in einem Isocyanatüberschuss und anschliessend mit mindestens einem Polymeren **Q_{PM}** in Unterschuss umgesetzt.

Im dritten Verfahren schliesslich, "2-Schrittverfahren II" genannt, wird mindestens ein Polymer **Q_{PM}** mit mindestens einem Diisocyanat oder Triisocyanat in einem Isocyanatüberschuss und anschliessend mit mindestens einem Polyphenol **Q_{PP}** in Unterschuss umgesetzt.

Die drei Verfahren führen zu Isocyanat-terminierten Polyurethanprepolymeren **PU1,** die sich bei gleicher Zusammensetzung in der Sequenz ihrer Bausteine unterscheiden können. Es sind alle drei Verfahren geeignet, jedoch ist das "2-Schrittverfahren II" bevorzugt.

Werden die beschriebenen Isocyanat-endständigen Polyurethanprepolymeren **PU1** aus difunktionellen Komponenten aufgebaut, zeigte sich, dass das Equivalenz-Verhältnis Polymer **Q_{PM}**/Polyphenol **Q_{PP}** bevorzugt grösser als 1.50 und das Equivalenz-Verhältnis Polyisocyanat/(Polyphenol **Q_{PP}** + Polymer **Q_{PM}**) bevorzugt grösser als 1.20 ist.

Wird die durchschnittliche Funktionalität der verwendeten Komponenten grösser als 2, so erfolgt eine raschere Molekulargewichtserhöhung als im rein difunktionellen Fall. Für den Fachmann ist klar, dass die Grenzen der möglichen Equivalenz-Verhältnisse stark davon abhängen, ob entweder das gewählte Polymer **Q_{PM},** das Polyphenol **Q_{PP},** das Polyisocyanat oder mehrere der genannten Komponenten eine Funktionalität >2 besitzen. Je nach dem können unterschiedliche Equivalenz-Verhältnisse eingestellt werden, deren Grenzen durch die Viskosität der resultierenden Polymere bestimmt wird und die experimentell von Fall zu Fall bestimmt werden müssen.

Das Polyurethanprepolymer **PU1** weist bevorzugt elastischen Charakter auf und zeigt eine Glasumwandlungstemperatur Tg von kleiner als 0°C.

Das endständig blockierte Polyurethanprepolymer der Formel (I) kann aus einem Isocyanatgruppen aufweisenden Polyurethanprepolymer **PU1,** welches die Formel (III) aufweist, und den NCO-reaktiven Verbindungen R²-H und R³-H hergestellt werden.

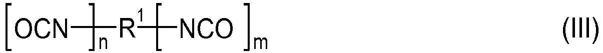

Hierbei kann die Umsetzung des Isocyanatgruppen aufweisenden Polyurethanprepolymers **PU1** entweder mit einer Mischung von R²-H und R³-H erfolgen oder es kann eine sequentielle Umsetzung über ein Zwischenprodukt der Formel (IVa) oder (IVb) erfolgen.

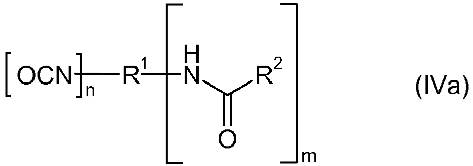

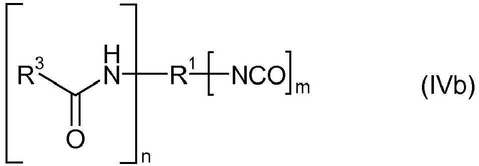

In einem zweiten Schritt wird dann dieses NCO-Gruppen-haltige Zwischenprodukt der Formel (IVa) mit R³H, beziehungsweise dieses NCO-Gruppen-haltige Zwischenprodukt der Formel (IVb) mit R²H, zum endständig blockierten Polyurethanprepolymer der Formel (I) umgesetzt. Diese sequentielle Umsetzung hat den Vorteil, dass die Reaktion besser gesteuert werden kann, so dass die Bildung von symmetrischen Adduktionsprodukten ("gleich" blockiert) reduziert wird. Dies ist insbesondere dann vorteilhaft, wenn die NCO-Reaktivitäten der Verbindungen R²-H und R³-H sehr unterschiedlich sind.

In einer bevorzugten Ausführungsform, in der R² für die Gruppe der Formel (II) steht, erfolgt die entsprechende Reaktion des Polyurethanprepolymers **PU1,** welches die Formel (III) aufweist, mit einer Monohydroxyl-Epoxidverbindung der Formel (V) und einem Blockierungsmittel R³-H.

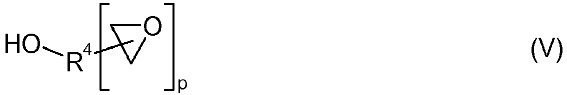

Bei einer sequentiellen Reaktion, die auch hier bevorzugt wird, entsteht ein Zwischenprodukt der Formel (IVb) oder der Formel (IVc) 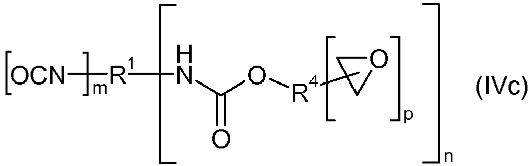 Es ist bevorzugt, dass die Herstellung des endständig blockierten Polyurethanprepolymers der Formel (I) über das Zwischenprodukt der Formel (IVc) erfolgt.

Diese sequentielle Reaktion kann einerseits dazu verwendet werden, um das blockierte Polyurethanprepolymer der Formel (I) direkt zu bilden, welches dann in der Zubereitung der Epoxidharzzusammensetzung eingesetzt wird.

Andererseits kann die sequentielle Reaktion auch in einer spezifischen Ausführungsform, wie im Folgenden beschrieben, verwendet werden. Das im ersten Schritt der sequentiellen Reaktion erhaltene Zwischenprodukt, d.h. das partiell blockierte Prepolymer der Formel (IVa) oder (IVb), insbesondere der Formel (IVc), kann so mit den weiteren Bestandteilen einer hitzehärtenden Epoxidharzzusammensetzung, wie später in diesem Dokument im Detail beschrieben wird, weiter vermengt werden und zu einem Vorfabrikat gefertigt werden, welches transportier- und bei Raumtemperatur unter Ausschluss von Feuchtigkeit lagerfähig ist. Zu einem späteren Zeitpunkt kann vor der Applikation die entsprechende Verbindung R²H oder R³H in das Vorfabrikat eingemischt werden, zum Beispiel mit Hilfe einer Extrusion, und so in situ innerhalb der Zusammensetzung zur Bildung des blockierten Polyurethanprepolymers der Formel (I) führen.

Die Monohydroxyl-Epoxidverbindung der Formel (V) weist 1, 2 oder 3 Epoxidgruppen auf. Die Hydroxylgruppe dieser Monohydroxyl-Epoxidverbindung (V) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidyl-ether,Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IX), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IX), die bei der Reaktion von Bisphenol-F (R = H) oder des Gemisches von Bisphenol-A und Bisphenol-F mit Epichlorhydrin gebildet werden.

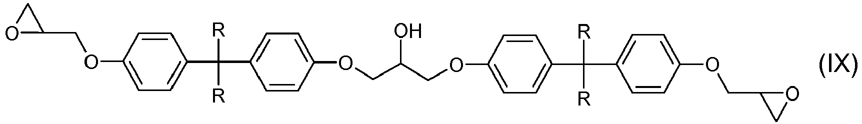

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Die freie primäre oder sekundäre OH-Funktionalität der Monohydroxyl-Epoxidverbindung der Formel (V) lässt eine effiziente Umsetzung mit terminalen Isocyanatgruppen von Prepolymeren zu, ohne dafür unverhältnismässige Überschüsse der Epoxidkomponente einsetzen zu müssen.

Zur Umsetzung der Polyurethanprepolymeren **PU1** der Formel (III) können gesamthaft stöchiometrische Mengen an R³H, und R²H eingesetzt werden. Falls eine sequentielle Umsetzung unter Bildung des Zwischenproduktes der Formel (IVa), (IVb) oder (IVc) durchgeführt wird, kann es von Vorteil sein, einen stöchiometrischen Überschuss der im zweiten Schritt verwendeten

Verbindung R³H, bzw. R²H, einzusetzen, um zu gewährleisten, dass alle NCO Gruppen abreagiert werden.

Das endständig blockierte Polyurethanprepolymer der Formel (I) weist vorteilhaft einen elastischen Charakter auf und ist weiterhin vorteilhaft in Epoxid-Flüssigharzen löslich oder dispergierbar.

Es wurde gefunden, dass das endständig blockierte Polyurethanprepolymer der Formel (I) in hervorragender Art und Weise als Schlagzähigkeitsmodifikator, insbesondere in Epoxidharzen, verwendet werden kann.

In einem weiteren Aspekt betrifft die vorliegende Erfindung hitzehärtbare Epoxidharzzusammensetzungen, welche
- mindestens ein Epoxidharz **A** mit durchschnittlich mehr als einer Epoxidgruppe pro Molekül;
- mindestens ein vorgängig beschriebenes endständig blockiertes Polyurethanprepolymer der Formel (I), sowie
- mindestens einen Härter **B** für Epoxidharze, welcher durch erhöhte Temperatur aktiviert wird,
enthalten.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (X) auf

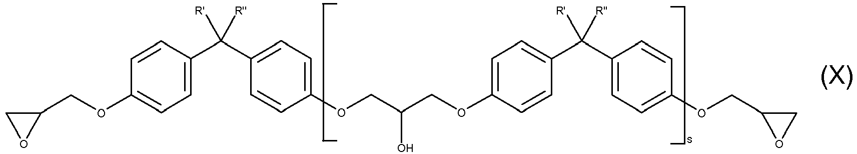

Hierbei stehen die Substituenten R' und R" unabhängig voneinander entweder für H oder CH₃. Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (X) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (XI) auf

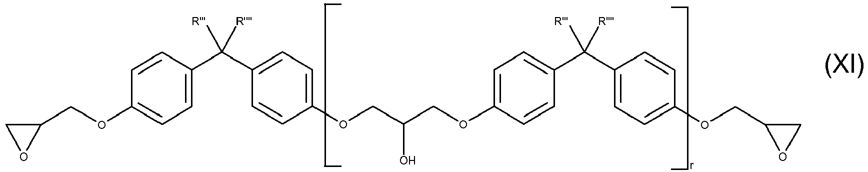

Hierbei stehen die Substituenten R'" und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Bevorzugt stellt das Epoxidharz **A** ein Epoxid-Flüssigharz der Formel (XI) dar. In einer noch mehr bevorzugten Ausführungsform enthält die hitzehärtende Epoxidharzzusammensetzung sowohl mindestens ein Epoxid-Flüssigharz der Formel (XI) als auch mindestens ein Epoxid-Festharz der Formel (X).

Der Anteil von Epoxidharzes **A** beträgt vorzugsweise 10 - 85 Gew.-%, insbesondere 15 - 70 Gew.-%, bevorzugt 15 - 60 Gew.-%, am Gewicht der Zusammensetzung.

Der Anteil des endständig blockierten Polyurethanprepolymers der Formel (I) beträgt vorzugsweise 1 - 45 Gew.-%, insbesondere 3 - 30 Gew.-%, am Gewicht der Zusammensetzung.

Die erfindungsgemässe Zusammensetzung enthält weiterhin mindestens einen Härter **B** für Epoxidharze, welcher durch erhöhte Temperatur aktiviert wird. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden.

Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.

Besonders bevorzugt als Härter **B** ist Dicyandiamid.

Vorteilhaft beträgt der Gesamtanteil des Härters **B** 1 - 10 Gewichts-%, vorzugsweise 2 - 8 Gewichts-%, bezogen auf das Gewicht der gesamten Zusammensetzung.

Die hitzehärtende Epoxidharzzusammensetzung kann weiterhin ein Thixotropiermittel **C** auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylen-diisocyanat (MDI) mit Butylamin erwiesen.

Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.

Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer **PU2,** insbesondere erhalten durch Umsetzung eines trifunktionellen Polyetherpolyols mit IPDI und anschliessender Blockierung der endständigen Isocyanatgruppen mit ε-Caprolactam.

Vorteilhaft beträgt der Gesamtanteil des Thixotropiermittels **C** 0 - 40 Gewichts-%, vorzugsweise 5 - 25 % Gewichts-%, bezogen auf das Gewicht der gesamten Zusammensetzung. Das Verhältnis vom Gewicht des Harnstoffderivates zum Gewicht des allenfalls vorhandenen Trägermittels beträgt vorzugsweise 2 / 98 bis 50 / 50, insbesondere 5 / 95 - 25 /75.

Die hitzehärtende Epoxidharzzusammensetzung enthält vorzugsweise weiterhin einen Flüssigkautschuk **D,** welcher vorzugsweise ein carboxyl- oder epoxidterminiertes Polymer ist.

In einer ersten Ausführungsform ist dieser Flüssigkautschuk **D** ein carboxyl- oder epoxidterminiertes Acrylnitril/Butadien-Copolymer oder ein Derivat davon. Derartige Flüssigkautschuke sind beispielsweise unter dem unter dem Namen Hycar® CTBN und CTBNX und ETBN von Nanoresins AG, Deutschland kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer zweiten Ausführungsform ist dieser Flüssigkautschuk **D** ein epoxidterminiertes Polyurethanprepolymer der Formel (XII) beziehungsweise in einer anderen Darstellungsart gemäss Formel (XII').

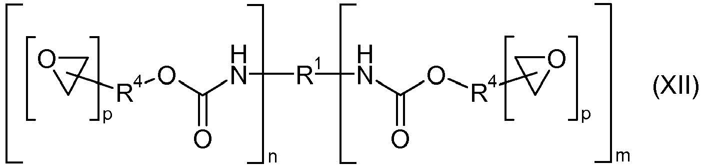

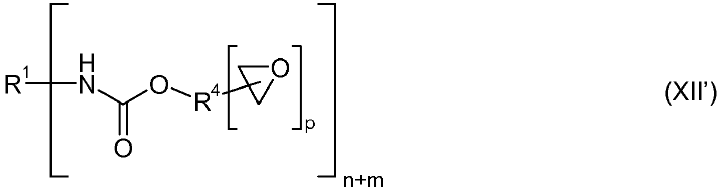

Derartige mit einem einzigen Blockierungsmittel blockierte, d.h. gleich blockierte, Polyurethanprepolymere sind zum Grossteil bereits aus WO-A-2005/007720, dort als Polymer **B** der Formel (I) bezeichnet, bekannt. Ihre Herstellung erfolgt, wie auch in WO-A-2005/007720 im Detail beschrieben, aus dem Isocyanatgruppen aufweisenden Polyurethanprepolymer **PU1,** welches die Formel (III) aufweist, und einem Überschuss der Monohydroxyl-Epoxidverbindung der Formel (V).

In einer dritten Ausführungsform ist dieser Flüssigkautschuk **D** ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

Es ist dem Fachmann klar, dass natürlich auch Mischungen von Flüssigkautschuken verwendet werden können, insbesondere Mischungen von carboxyl- oder epoxidterminiertes Acrylnitril/Butadien-Copolymeren oder Derivaten davon mit epoxidterminierten Polyurethanprepolymeren der Formel (XII).

Der Flüssigkautschuk **D** wird vorteilhaft in einer Menge von 1 - 35 Gew.-%, insbesondere 1 - 25 Gew.-%, bezogen auf das Gewicht der Zusammensetzung, eingesetzt.

Die hitzehärtende Epoxidharzzusammensetzung enthält vorzugsweise weiterhin einen festen Zähigkeitsverbesserer **E.** Unter einem "Zähigkeitsverbesserer" wird hierbei und im Folgenden ein Zusatz zu einer Epoxidharzmatrix verstanden, der bereits bei geringen Zuschlägen von 0.1 - 15 Gew.-%, insbesondere von 0.5 - 8 Gew.-%, eine deutliche Zunahme der Zähigkeit bewirkt und somit in der Lage ist, höherer Biege-, Zug-, Schlag- oder Stossbeanspruchung aufzunehmen, bevor die Matrix einreisst oder bricht.

Der feste Zähigkeitsverbesserer **E** ist in einer ersten Ausführungsform ein organisches Ionen-getauschtes Schichtmineral **E1.**

Das Ionen-getauschte Schichtmineral **E1** kann entweder ein Kationen-getauschtes Schichtmineral **E1c** oder ein Anionen-getauschtes Schichtmineral **E1a** sein.

Das Kationen-getauschte Schichtmineral **E1c** wird hierbei erhalten aus einem Schichtmineral **E1',** bei welchem zumindest ein Teil der Kationen durch organische Kationen ausgetauscht worden sind. Beispiele für derartige Kationen-getauschte Schichtmineralien **E1c** sind insbesondere diejenigen, welche in US 5,707,439 oder in US 6,197,849 erwähnt sind. Ebenso ist dort das Verfahren zur Herstellung dieser Kationen-getauschten Schichtminerale **E1c** beschrieben. Bevorzugt als Schichtmineral **E1'** ist ein Schichtsilikat. Insbesondere bevorzugt handelt es sich beim Schichtmineral **E1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **E1'** wie Kaolinit oder ein Montmorillionit oder ein Hectorit oder ein Illit gezeigt.

Zumindest ein Teil der Kationen des Schichtminerals **E1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.

Bevorzugte Kationen-getauschte Schichtminerale **E1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) erhältlich.

Das Anionen-getauschte Schichtmineral **E1a** wird hierbei erhalten aus einem Schichtmineral **E1",** bei welchem zumindest ein Teil der Anionen durch organische Anionen ausgetauscht worden sind. Ein Beispiel für ein derartig Anionen-getauschtes Schichtmineral **E1a** ist ein Hydrotalcit **E1",** bei dem zumindest ein Teil der Carbonat-Anionen der Zwischenschichten durch organische Anionen ausgetauscht wurden. Ein weiteres Beispiel sind funktionalisierte Alumoxane wie z. B. in US Patent 6 322890 beschrieben.

Es ist durchaus auch möglich, dass die Zusammensetzung gleichzeitig ein Kationen-getauschtes Schichtmineral **E1c** und ein Anionen-getauschtes Schichtmineral **E1a** enthält.

Der feste Zähigkeitsverbesserer ist in einer zweiten Ausführungsform ein Blockcopolymer **E2.** Das Blockcopolymer **E2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylsäureester/Styrol/Acrylonitril-Copolymere (ASA), erhältlich z.B. unter dem Namen GELOY 1020 von GE Plastics.

Besonders bevorzugte Blockcopolymere **E2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

Der feste Zähigkeitsverbesserer **E** ist in einer dritten Ausführungsform ein Core-Shell Polymer **E3.** Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351 ™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur™ von Nanoresins AG, Deutschland, angeboten.

Der feste Zähigkeitsverbesserer **E** ist in einer vierten Ausführungsform ein festes Umsetzungsprodukt **E4** eines carboxylierten festen Nitrilkautschuks mit überschüssigem Epoxidharz.

Als fester Zähigkeitsverbesserer **E** sind Core-Shell Polymere bevorzugt.

Die hitzehärtende Epoxidharzzusammensetzung kann das feste Core-Shell Polymer **E3** enthalten, insbesondere in einer Menge von 0.1 - 15 Gew.-%, vorzugsweise 1 - 8 Gew.-%, bezogen auf das Gewicht der Zusammensetzung.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts-%, bezogen auf das Gewicht der gesamten Zusammensetzung.

In einer weiteren bevorzugten Ausführungsform enthält die Zusammensetzung ein physikalisches oder chemisches Treibmittel, wie es beispielsweise unter dem Handelsnamen Expancel™ der Firma Akzo Nobel oder Celogen™ der Firma Chemtura erhältlich ist. Der Anteil des Treibmittels beträgt vorteilhaft 0.1 - 3 Gew.-%, bezogen auf das Gewicht der Zusammensetzung.

In einer weiteren bevorzugten Ausführungsform enthält die Zusammensetzung zusätzlich mindestens einen Epoxidgruppen-tragenden Reaktivverdünner **G.** Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.5 - 20 Gewichts-%, vorzugsweise 1 - 8 Gewichts-%, bezogen auf das Gewicht der gesamten Zusammensetzung.

Die Zusammensetzung kann weitere Bestandteile, insbesondere Katalysatoren, Hitze- und/oder Lichtstabilisatoren, Thixotropiermittel, Weichmacher, Lösungsmittel, mineralische oder organische Füllstoffe, Treibmittel, Farbstoffe und Pigmente, umfassen.

Es hat sich gezeigt, dass sich die beschriebenen hitzehärtenden Epoxidharzzusammensetzungen besonders als einkomponentige Klebstoffe eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und vor allem bei tiefen Temperaturen, insbesondere zwischen 0°C bis -40°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen hitzehärtenden Zusammensetzung ist es möglich, die gewünschte Kombination von hoher Crashfestigkeit sowohl hoher als auch tiefer Einsatztemperatur zu erreichen.

Ein solcher Klebstoff wird zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Aus einem derartigen Verfahren zum Verkleben von hitzestabilen Materialien resultiert ein verklebter Artikel. Ein derartiger Artikel ist vorzugsweise ein Fahrzeug oder ein Anbauteil eines Fahrzeugs.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Es lassen sich Zusammensetzungen formulieren, welche typischerweise Bruchenergien, gemessen nach ISO 11343, von mehr als 10.0 J bei 23°C und mehr als 9.0 J bei -30°C und/oder von mehr als 8.0 J bei -40°C aufweisen. Es lassen sich zuweilen Zusammensetzungen formulieren, welche Bruchenergien von mehr als 13.0 J bei 23°C und von mehr als 10.0 J bei - 30°C und/oder von mehr als 9.0 J bei -40°C aufweisen. Besonders vorteilhafte Zusammensetzungen weisen gar Bruchenergien von mehr als 14.0 J bei 23°C und von mehr als 11.0 J bei -30°C und/oder von mehr als 10.0 J bei -40°C auf.

Eine besonders bevorzugte Anwendung der erfindungsgemässen hitzehärtenden Epoxidharzzusammensetzung ist die Anwendung als hitzehärtender Rohbauklebstoff im Fahrzeugbau.

### Beispiele

Im Folgenden sollen einige Beispiele aufgezeigt werden, welche die Erfindung weiter veranschaulichen, den Umfang der Erfindung aber in keiner Weise beschränken sollen. Die in den Beispielen verwendeten Rohstoffe sind in Tabelle 1 aufgelistet.

**Tabelle1. Eingesetzte Rohstoffe.**

| **Verwendete Rohstoffe** | **Lieferant** |
|---|---|
| D.E.R.™ 330 (Bisphenol-A-Diglycidylether = "*DGEBA*") | Dow |
| D.E.R. 671 ("Typ-1" Festharz) (EP-Equivalentgewicht475-550g/eq) | Dow |
| Struktol® Polydis® VP-3611 (Bisphenol-F-Diglycidylether modifizierer Nitril-Butadien-Rubber)(EEW = 560 g/val)) (= "*Polydis*") | Schill&Seilacher |
| Araldite® DY-H (Hexandioldiglycidylether)(= "*DY-H*") | Huntsman |
| Dicyandiamid (="*dicy*") | Degussa |
| Poly-THF 2000 (Difunktionelles Polybutylenglykol) (OH-Equivalentgewicht = ca. 1000 g/OH-Equivalent) | BASF |
| Desmophen 3060 BS (Trifunktionelles Polypropylenglykol) (OH-Equivalentgewicht = 1000 g/OH-Equivalent) | Bayer |
| Isophoron-diisocyanat (=IPDI) | Degussa-Hüls |
| 4,4'-Diphenyl-methylen-diisocyanat (=MDI) | Bayer |
| N-Butylamin | BASF |
| ε-Caprolactam | EMS Chemie |
| Cardolite NC-700 (Cardanol) (="*NC*") | Cardolite |
| 2,2'-Diallyl-bisphenol-A (="*DABPA*") | Sigma-Aldrich |
| 2-Hydroxybenzylalkohol (="*HBA*") | Sigma-Aldrich |

### Beispielhafte Herstellung eines monohydroxylhaltigen Epoxides "M1"

Trimethylolpropanglycidylether wurde gemäss dem Verfahren in Patent US 5,668,227, Beispiel 1, aus Trimethylolpropan und Epichlorhydrin mit Tetramethylammoniumchlorid und Natronlauge hergestellt. Man erhält ein gelbliches Produkt mit einer Epoxidzahl von 7.5 eq/kg und einem Hydroxylgruppengehalt von 1.8 eq/kg. Aus dem HPLC-MS Spektrum kann geschlossen werden, dass im Wesentlichen ein Gemisch von Trimethylolpropandiglycidylether und Trimethylolpropantriglycidylether vorliegt. Dieses Produkt wurde in Tabelle 2 als *M1* eingesetzt.

### Monohydroxylhaltiges Epoxid "M2"

### 1,3-bis(4-(2-(4-(oxiran-2-ylmethoxy)phenyl)propan-2-yl)phenoxy)-propan-2-ol) ("DGEBA-Dimer"):

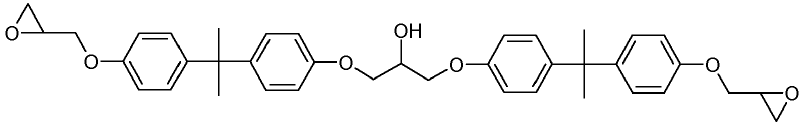

Entsprechend Verbindung der Formel (IX), in welcher mit R für Methyl steht. 1,3-bis(4-(2-(4-(oxiran-2-ylmethoxy)phenyl)propan-2-yl)phenoxy)propan-2-ol) wurde aus technischem Bisphenol-A-diglycidylether (DGEBA) (Araldite® GY 250, Hersteller Huntsman) gewonnen, in welchem es ca. zu 15 Gew.-% vorhanden ist. Es kann durch destillatives Entfernen von DGEBA aufkonzentriert werden. In einem Dünnfilmverdampfer (Hersteller: Fa Ilmag) wird bei 180 °C Heizmanteltemperatur im Ölpumpenvakuum technischer Bisphenol-A-diglycidylether (EEW = 195 g/Epoxidequivalent, bestimmt durch Titration) mit einer Membranpumpe mit 200 ml/h dosiert. Dabei destilliert reines DGEBA ab, das bei Raumtemperatur kristallisiert. Der verbleibende Sumpf weist ein EEW = 207.1 g/Epoxidequivalent auf. Mit THF als Lösungsmittel zeigt das GPC Diagramm ein Flächenverhältnis der Peaks von "DGEBA-Dimer" und DGEBA von 40:60. Dieses Produkt wurde als *"M2*" in Tabelle 2 eingesetzt.

### Beispiele der Herstellung von Isocyanat-terminierten Polyurethanprepolymeren

### PU1-1

200.00 g Desmophen 3060 BS (OH-Zahl 57.0 mg/g KOH) wurden 30 Minuten unter Vakuum bei 110°C getrocknet. Nachdem die Temperatur auf 90°C reduziert worden war, wurde 47.55 g IPDI und 25 mg Dibutylzinndilaurat zugegeben. Die Reaktion wurde unter Vakuum bei 90°C bis zur Konstanz des NCO-Gehaltes bei 3.64% nach 2.5 h geführt (theoretischer NCO-Gehalt: 3.73%).

### PU1-2

200.00 g Poly-THF 2000 (OH-Zahl 57.0 mg/g KOH) wurden 30 Minuten unter Vakuum bei 110°C getrocknet. Nachdem die Temperatur auf 90°C reduziert worden war, wurde 48.0 g IPDI und 25 mg Dibutylzinndilaurat zugegeben. Die Reaktion wurde unter Vakuum bei 90°C bis zur Konstanz des NCO-Gehaltes bei 3.65 % nach 2.5 h geführt (theoretischer NCO-Gehalt: 3.76 %).

### Beispiel eines endständig blockierten Polyurethanprepolymers der Formel (I)

Beispielhaft wird hier im Detail die Herstellung des Polymers **P2** beschrieben:
Zu den 247.6 g des oben hergestellten Isocyanatterminierten Polyurethanprepolymers ***PU1-1*** wurden nun 65.5 g des oben beschriebenen monohydroxylhaltigen Epoxides *M1* zugegeben, womit molmässig die Hälfte der endständigen Isocyanate des Polymers abreagiert wurden. Es wurde bei 90°C unter Vakuum gerührt, bis der NCO-Gehalt nach weiteren 2 Stunden auf ca. 1.4% gesunken war. Anschliessend wurden 38.6g Cardanol zugegeben (Hydroxylgehalt: ca. 3.33 eq/kg).

Es wurde ein klares Produkt mit einem Epoxid-Gehalt ("End-Gehalt") von 1.39 eq/kg und einem NCO-Gehalt von < 0.05% erhalten.

Die anderen, in Tabelle 2 beschriebenen, blockierten Polyurethanprepolymere wurden analog hergestellt. Bei den blockierten Polyurethanpolymeren ***P1, P2, P3, P-R1*** und ***P-R2*** erfolgte eine Variation der eingesetzten Menge an monohydroxylhaltigem Epoxid (*M1*) und Cardanol (*NC*)*.* Bei den blockierten Polyurethanpolymeren ***P4, P5*** und ***P6*** wurde, verglichen mit ***P2,*** das monohydroxylhaltige Epoxid *M2,* beziehungsweise Mischungen von *M1* und *M2,* eingesetzt. Bei den blockierten Polyurethanpolymeren ***P7, P8, P-R3, P-R4*** und ***P-R5*** wurde ***PU1-2*** als Polyurethanprepolymer eingesetzt und es wurden andere Blockierungsmittel verwendet. In ***P7, P-R3*** und **P-R4** wurde die Menge *M1* und 2,2'-Diallyl-bisphenol-A (*DABPA*) variiert und in ***P8*** und ***P-R5*** wurde die Menge an *M1* und 2-Hydroxybenzylalkohol (*HBA*) variiert.

Die Polymere ***P-R1, P-R2, P-R3, P-R4*** und ***P-R5*** weisen lediglich ein Blockierungsmittel auf und sind somit "gleich blockiert".

**Tabelle 2: Herstellung blockierter Polyurethanprepolymere.**

| | ***P-R1*** | ***P1*** | ***P2*** | ***P3*** | ***P-R2*** | ***P4*** | ***P5*** | ***P6*** | ***P-R3*** | ***P7*** | ***P-R4*** | ***P8*** | ***P-R5*** |
|---|---|---|---|---|---|---|---|---|---|---|---|---|---|
| ***PU1-1*** [g] | 247.6 | 247.6 | 247.6 | 247.6 | 247.6 | 247.6 | 247.6 | 247.6 | | | | | |
| ***PU1-2*** [g] | | | | | | | | | 248.0 | 248.0 | 248.0 | 248.0 | 248.0 |
| *M1* [g] | 131.0 | 117.9 | 65.5 | 26.2 | | 39.7 | 19.9 | | 131.6 | 65.8 | | 12.0 | 0 |
| *M1* (%)¹ | *100* | *90* | *50* | *20* | *0* | *33* | *17* | *0* | *100* | *50* | *0* | *10* | *0* |
| *M2* [g] | | | | | | 71.5 | 143.0 | 214.4 | | | | | |
| *M2* (%)¹ | | | | | | *17* | *33* | *50* | | | | | |
| *DABPA*[g] | | | | | | | | | 0 | 37.3 | 78.6 | | |
| *DABPA*(%)¹ | | | | | | | | | *0* | *50* | *100* | | |
| *NC*[g] | | 7.8 | 38.6 | 61.8 | 77.3 | 38.6 | 38.6 | 38.6 | | | | | |
| *NC* (%)¹ | *0* | *10* | *50* | *80* | *100* | *50* | *50* | *50* | | | | | |
| *HBA*[g] | | | | | | | | | | | | 26.6 | 29.0 |
| *HBA* (%)¹ | | | | | | | | | | | | *90* | *100* |

| | | | | | | | | | | | | | |
|---|---|---|---|---|---|---|---|---|---|---|---|---|---|
| ¹ Anzahl mol-% der mit diesem Blockierungsmittel blockierten NCO Gruppen des Polyurethanprepolymers ***PU1-1*** resp. ***PU1-2.*** | | | | | | | | | | | | | |

### Thixotropiermittel C

Als Beispiel für ein Thixotropiermittel **C** auf Basis eines Harnstoffderivates in einem nicht-diffundierenden Trägermaterial wurde ein Thixotropiermittel **C** gemäss Patentanmeldung EP 1 152 019 A1 in einem blockierten Polyurethan-Prepolymer mit oben erwähnten Rohstoffen hergestellt:

### Trägermaterial: Blockiertes Polyurethanprepolymer "BlockPU"

600.0 g eines Polyetherpolyols (Desmophen 3060BS; 3000 Dalton; OH-Zahl 57 mg/g KOH) wurden unter Vakuum und Rühren bei 90°C mit 140.0 g IPDI und 0.10 g Dibutylzinndilaurat zum Isocyanat-terminierten Prepolymer umgesetzt. Die Reaktion wurde bis zur Konstanz des NCO-Gehaltes bei 3.41% nach 2.5 h geführt (theoretischer NCO-Gehalt: 3.60%). Anschliessend wurden die freien Isocyanatgruppen bei 90°C unter Vakuum mit 69.2g ε-Caprolactam (2% Überschuss) blockiert, wobei ein NCO-Gehalt von < 0.1% nach 3h erreicht wurde.

### Harnstoffderivat ("HSD") in blockiertem Polyurethan-Prepolymer:

Unter Stickstoff und leichtem Wärmen wurden 68.7 g MDI-Flocken in 181.3 g des oben beschriebenen blockierten Prepolymeres *"BlockPU"* eingeschmolzen. Danach wurden während zwei Stunden unter Stickstoff und schnellem Rühren 40.1 g N-Butylamin gelöst in 219.9 g des oben beschriebenen blockierten Prepolymers *"BlockPU"* zugetropft. Nach Beendigung der Zugabe der Aminlösung wurde die weisse Paste für weitere 30 Minuten weitergerührt. So wurde nach dem Abkühlen eine weisse, weiche Paste erhalten, welche einen freien Isocyanatgehalt von < 0.1% aufwies (Anteil Harnstoffderivat ca. 21%).

### Herstellung der Zusammensetzungen

Es wurden gemäss Tabelle 3 die Referenzzusammensetzungen ***Ref.1* - *Ref. 5*** sowie die erfindungsgemässen Zusammensetzungen ***1 bis 8*** hergestellt.

### Prüfmethoden:

### Zugscherfestigkeit (ZSF) (DIN EN 1465)

Die Probekörper wurden aus den beschriebenen Beispiel-Zusammensetzungen und mit elektrolytisch verzinktem DC04 Stahl (eloZn) mit dem Mass 100 x 25 x 1.5 mm bzw. 100 x 25 x 0.8 mm, hergestellt, dabei betrug die Klebfläche 25 x 10mm bei einer Schichtdicke von 0.3mm. Gehärtet wurde 30 Min. bei 180°C. Die Zuggeschwindigkeit betrug 10mm/min.

### Zugfestigkeit (ZF) (DIN EN ISO 527)

Eine Klebstoffprobe wurde zwischen zwei Teflonpapieren auf eine Schichtdicke von 2mm verpresst. Anschliessend wurde der Klebstoff während 30 Minuten bei 180°C gehärtet. Die Teflonpapiere wurden entfernt und die Probekörper nach DIN-Norm wurden im heissen Zustand ausgestanzt. Die Prüfkörper wurden nach 1 Tag Lagerung unter Normklima mit einer Zuggeschwindigkeit von 2 mm/min gemessen.

Die Zugfestigkeit wurde gemäss DIN EN ISO 527 bestimmt.

### Schlagschälarbeit (ISO 11343)

Die Probekörper wurden aus den beschriebenen Beispiel-Zusammensetzungen und mit elektrolytisch verzinktem DC04 Stahl (eloZn) mit dem Mass 90 x 20 x 0.8mm hergestellt, dabei betrug die Klebfläche 20 x 30mm bei einer Schichtdicke von 0.3mm. Gehärtet wurde 30 Min. bei 180°C. Die Messung der Schlagschälarbeit erfolgte jeweils bei Raumtemperatur, bei minus 20°C und bei minus 40°C, respektive minus 30°C. Die Schlaggeschwindigkeit betrug 2 m/s. Als Bruchenergie (BE) in Joule wird die Fläche unter der Messkurve (von 25% bis 90%, gemäss ISO 11343) angegeben.

Die Ergebnisse dieser Prüfungen sind in Tabelle 3 zusammengestellt.

**Tabelle 3. Zusammensetzungen von hitzehärtenden Zusammensetzungen und Resultate. ¹BE =Bruchenergie.²n.m. = nicht gemessen.**

| | ***Ref.1*** | ***1*** | ***2*** | ***3*** | ***Ref.2*** | ***4*** | ***5*** | ***6*** | ***Ref.3*** | ***7*** | ***Ref.4*** | ***8*** | ***Ref.5*** |
|---|---|---|---|---|---|---|---|---|---|---|---|---|---|
| D.E.R.671(**A**)[g] | 15.0 | 15.0 | 15.0 | 15.0 | 15.0 | 15.0 | 15.0 | 15.0 | 18.0 | 18.0 | 18.0 | 18.0 | 18.0 |
| *DGEBA* (**A**) [g] | 30.0 | 30.0 | 30.0 | 30.0 | 30.0 | 27.0 | 24.0 | 20.0 | 37.0 | 37.0 | 37.0 | 37.0 | 37.0 |
| *DY-H* (**G**) [g] | 3.0 | 3.0 | 3.0 | 3.0 | 3.0 | 3.0 | 3.0 | 3.0 | 3.0 | 3.0 | 3.0 | 3.0 | 3.0 |
| *M1* (**G**) [g] | | 0.5 | 3.0 | 5.0 | 6.0 | 4.0 | 5.0 | 6.0 | | 4.5 | 8.5 | 7.0 | 8.5 |
| *Polydis* (**D**) [g] | 10.0 | 10.0 | 10.0 | 10.0 | 10.0 | 10.0 | 10.0 | 10.0 | | | | | |
| ***P-R1***[g] | 20.0 | | | | | | | | | | | | |
| ***P1***[g] | | 19.5 | | | | | | | | | | | |
| ***P2***[g] | | | 17.0 | | | | | | | | | | |
| ***P3***[g] | | | | 15.0 | | | | | | | | | |
| ***P-R2*** [g] | | | | | 14.0 | | | | | | | | |
| ***P4*** [g] | | | | | | 19.5 | | | | | | | |
| ***P5*** [g] | | | | | | | 21.5 | | | | | | |
| ***P6*** [g] | | | | | | | | 24.5 | | | | | |
| ***P-R3*** [g] | | | | | | | | | 25.0 | | | | |
| ***P7*** [g] | | | | | | | | | | 22.5 | | | |
| ***P-R4*** [g] | | | | | | | | | | | 21.5 | | |
| ***P8*** [g] | | | | | | | | | | | | 22.0 | |
| ***P-R5*** [g] | | | | | | | | | | | | | 21.5 |
| *HSD* (**C**) [(g] | 3.0 | 3.0 | 3.0 | 3.0 | 3.0 | 3.0 | 3.0 | 3.0 | 4.0 | 4.0 | 4.0 | 4.0 | 4.0 |
| *BlockPU* [g] | 10.0 | 10.0 | 10.0 | 10.0 | 10.0 | 10.0 | 10.0 | 10.0 | 16.0 | 16.0 | 16.0 | 16.0 | 16.0 |
| *dicy* (**D**) [g] | 4.4 | 4.4 | 4.4 | 4.4 | 4.4 | 4.4 | 4.4 | 4.4 | 5.0 | 5.0 | 5.0 | 5.0 | 5.0 |
| Füllstoffgemisch (**F**) [g] | 12.0 | 12.0 | 12.0 | 12.0 | 12.0 | 12.0 | 12.0 | 12.0 | 14.0 | 14.0 | 14.0 | 14.0 | 14.0 |
| | | | | | | | | | | | | | |
| ZF [MPa] | 30.4 | 30.9 | 29.8 | 31 | 29.9 | 31.9 | 32.2 | 31.4 | 34.0 | 29.8 | 26.0 | 25.7 | 24.4 |
| ZSF_{1.5mm} [MPa] | 37.6 | 39.7 | 39.6 | 37.5 | 38.8 | 34.0 | 36.0 | 32.3 | n.m.² | n.m.² | n.m.² | n.m.² | n.m.² |
| ZSF0_{0.8 mm} [MPa] | n.m.² | n.m.² | n.m.² | n.m.² | n.m.² | n.m.² | n.m.² | n.m.² | 21.6 | 23.6 | 23.0 | 22.4 | 20.2 |
| BE¹ bei 23°C[J] | 13.2 | 13.6 | 15.3 | 15.5 | 14.7 | 14.9 | 14.9 | 14.7 | 11.9 | 15.7 | 12.6 | 16.3 | 14.8 |
| BE¹ bei -20°C[J] | n.m.² | n.m.² | n.m.² | n.m.² | n.m.² | n.m.² | n.m.² | n.m.² | 11.2 | 14.4 | 10.0 | 15.8 | 14.8 |
| BE¹ bei -30°C[J] | 9.6 | 10.3 | 11.4 | 10.1 | 5.8 | 12.0 | 11.7 | 11.6 | n.m.² | n.m.² | n.m.² | n.m.² | n.m.² |
| BE¹ bei -40°C[J] | n.m.² | n.m.² | n.m.² | n.m.² | n.m.² | n.m.² | n.m.² | n.m.² | 9.6 | 13.5 | 4.5 | 14.0 | 12.9 |

## Patentansprüche

1. Endständig blockiertes Polyurethanprepolymer der Formel (I) 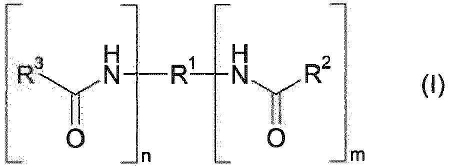 wobei
R¹ für ein mit n+m Isocyanatgruppen terminiertes lineares oder verzweigtes Polyurethanprepolymer **PU1** nach dem Entfernen aller endständigen Isocyanatgruppen steht;
R² unabhängig voneinander für eine Gruppe der Formel (II) steht 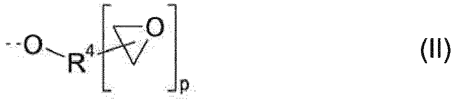 und
R³ unabhängig voneinander für eine Blockierungsgruppe, welche sich bei einer Temperatur über 100°C abspaltet, wobei R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
p = 1, 2 oder 3 ist;
n und m je für Werte zwischen 1 und 7 stehen mit der Massgabe,
dass 2 ≤ (m+n) ≤ 8 und dass R² von R³ verschieden ist.

2. Endständig blockiertes Polyurethanprepolymer der Formel (I) gemäss Anspruch 1, wobei R³ für einen Rest steht, welcher ausgewählt ist aus der Gruppe bestehend aus 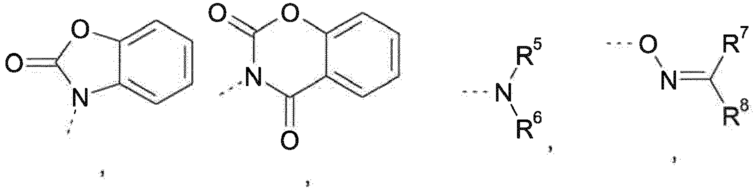 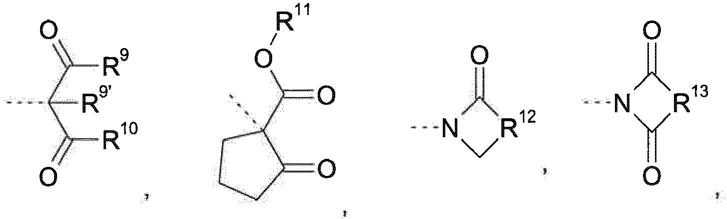 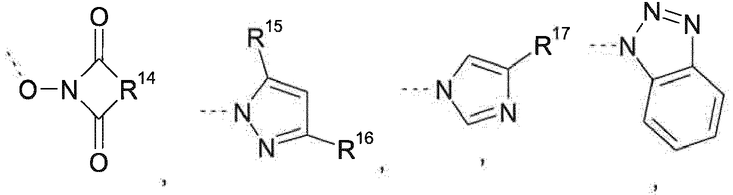 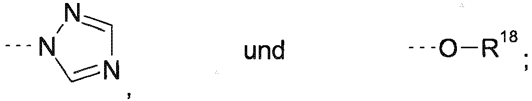 wobei
R⁵, R⁶, R⁷ und R⁸ je unabhängig voneinander für eine Alkyl- oder Cycloalkyl- oder Aryl- oder Aralkyl- oder Arylalkyl-Gruppe steht
oder R⁵ zusammen mit R⁶, oder R⁷ zusammen mit R⁸, einen Teil eines 4- bis 7- gliedrigen Rings bilden, welcher allenfalls substituiert ist;
R⁹, R^{9'} und R¹⁰ je unabhängig voneinander für eine Alkyl- oder Aralkyl- oder Aryl- oder Arylalkyl-Gruppe oder für eine Alkyloxy- oder Aryloxy- oder Aralkyloxy-Gruppe steht;
R¹¹ für eine Alkylgruppe steht,
R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R¹⁵, R¹⁶ und R¹⁷ je unabhängig voneinander für H oder für eine Alkylgruppe oder für eine Arylgruppe oder eine Aralkylgruppe stehen; und
R¹⁸ für eine Aralkylgruppe oder für eine ein- oder mehrkernige substituierte oder unsubstituierte Aromatengruppe steht, welche gegebenenfalls aromatische Hydroxylgruppen aufweist.

3. Endständig blockiertes Polyurethanprepolymer gemäss einem der vorhergehenden Ansprüche, **dadurch gekennzeichnet, dass** das Polyurethanprepolymer **PU1** hergestellt wird aus mindestens einem Diisocyanat oder Triisocyanat sowie
aus einem Polymeren **Q_{PM}** mit endständigen Amino-, Thiol- oder Hydroxylgruppen;
und / oder
aus einem, gegebenenfalls substituierten, Polyphenol **Q_{PP}.**

4. Hitzehärtbare Epoxidharzzusammensetzung enthaltend
- mindestens ein Epoxidharz **A** mit durchschnittlich mehr als einer Epoxidgruppe pro Molekül;
- mindestens ein endständig blockiertes Polyurethanprepolymer der Formel (I) gemäss einem der Ansprüche 1 bis 3,
- mindestens einen Härter **B** für Epoxidharze, welcher durch erhöhte Temperatur aktiviert wird.

5. Hitzehärtende Epoxidharzzusammensetzung gemäss Anspruch 4, **dadurch gekennzeichnet, dass** die Zusammensetzung weiterhin mindestens ein Thixotropiermittel **C,** auf Basis von Harnstoffderivat in einem Trägermaterial, insbesondere in einer Menge von 0-40 Gew.-%, bezogen auf das Gewicht der Zusammensetzung, enthält.

6. Hitzehärtende Epoxidharzzusammensetzung gemäss Anspruch 4 oder 5, **dadurch gekennzeichnet, dass** die Zusammensetzung weiterhin einen Flüssigkautschuk **D,** welcher vorzugsweise ein carboxyl- oder epoxidterminiertes Polymer, insbesondere ein carboxyl- oder epoxidterminiertes Acrylnitril/Butadien-Copolymer, ist, insbesondere in einer Menge von 1 - 35 Gew.-%, bezogen auf das Gewicht der Zusammensetzung, enthält.

7. Hitzehärtende Epoxidharzzusammensetzung gemäss einem der Ansprüche 4 bis 6, **dadurch gekennzeichnet, dass** die Zusammensetzung weiterhin einen festen Zähigkeitsverbesserer **E,** insbesondere in einer Menge von 0.1 - 15 Gew.-%, insbesondere von 0.5 - 8 Gew.-%, bezogen auf das Gewicht der Zusammensetzung, enthält.

8. Hitzehärtende Epoxidharzzusammensetzung gemäss einem der Ansprüche 4 bis 7, **dadurch gekennzeichnet, dass** die Epoxidharzzusammensetzung mindestens ein Treibmittel, insbesondere in einer Menge von 0.1 - 3 Gew.-%, bezogen auf das Gewicht der Zusammensetzung, enthält.

9. Hitzehärtende Epoxidharzzusammensetzung gemäss einem der Ansprüche 4 bis 8, **dadurch gekennzeichnet, dass** der Anteil des endständig blockierten Polyurethanprepolymer der Formel (I) 1- 45 Gew.-%, insbesondere 3 - 30 Gew.-%, am Gewicht der Zusammensetzung beträgt.

10. Verwendung des endständig blockierten Polyurethanprepolymers der Formel (I) gemäss einem der Ansprüche 1 bis 3 als Schlagzähigkeitsmodifikator, insbesondere in Epoxidharz basierenden Zusammensetzungen.

11. Verfahren zur Herstellung einer hitzehärtende Epoxidharzzusammensetzung gemäss einem der Ansprüche 4 bis 9, **dadurch gekennzeichnet, dass** das endständig blockierte Polyurethanprepolymer der Formel (I) durch eine sequentielle Reaktion erfolgt, wobei in einem ersten Schritt ein teilweise blockiertes Polyurethanprepolymer der Formel (IVa) oder (IVb) aus dem Isocyanatgruppen terminierten linearen oder verzweigten Polyurethanprepolymer **PU1** und der Verbindung R²H, respektive R³H gebildet wird; 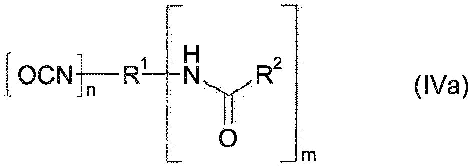 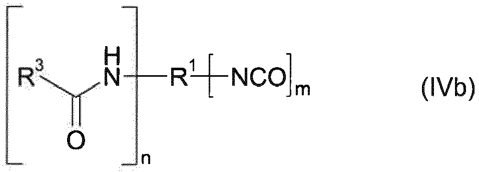 und im zweiten Schritt dann dieses NCO-Gruppenhaltige Zwischenprodukt der Formel (IVa) mit R³H, beziehungsweise dieses NCO-Gruppenhaltige Zwischenprodukt der Formel (IVb) mit R²H, zum endständig blockierten Polyurethanprepolymer der Formel (I) umgesetzt wird.

12. Verwendung einer hitzehärtenden Epoxidharzzusammensetzung gemäss einem der Ansprüche 4 bis 9 als einkomponentiger hitzehärtender Klebstoff, insbesondere als hitzehärtender Rohbauklebstoff im Fahrzeugbau.

13. Verfahren zum Verkleben von hitzestabilen Materialien, insbesondere von Metallen, **dadurch gekennzeichnet, dass** diese Materialien mit einer hitzehärtenden Epoxidharzzusammensetzung gemäss einem der Ansprüche 4 bis 9 kontaktiert werden und das Verfahren einen oder mehrere Schritte des Aushärtens bei einer Temperatur von 100 - 220 °C, vorzugsweise 120 - 200°C, umfasst.

14. Verklebter Artikel, welcher durch ein Verfahren gemäss Anspruch 13 erhalten wird.

## Claims

1. End-capped polyurethane prepolymer of the formula (I) 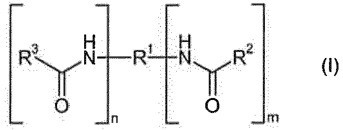 where
R¹ is a linear or branched polyurethane prepolymer **PU1** terminated by n+m isocyanate groups, after removal of all of the terminal isocyanate groups; each R², independently of the others, is a group of the formula (II) 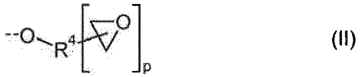 and
each R³, independently of the others, is a capping group which cleaves at a temperature above 100°C, where R⁴ is a moiety of an aliphatic, cycloaliphatic, aromatic, or araliphatic epoxide containing a primary or secondary hydroxy group, after the removal of the hydroxide and epoxide groups;
p = 1, 2, or 3;
each of n and m is a value from 1 to 7, with the proviso
that 2 ≤ (m+n) ≤ 8, and that R² differs from R³.

2. End-capped polyurethane prepolymer of the formula (I) according to Claim 1, where R³ is a moiety selected from the group consisting of 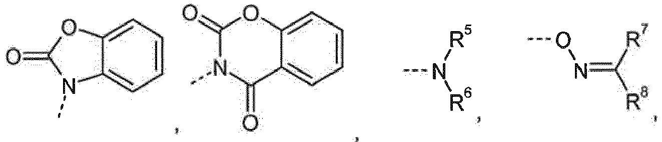 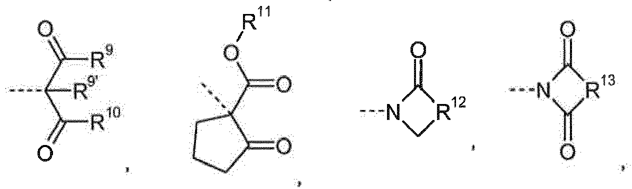 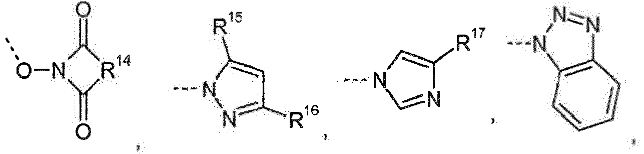 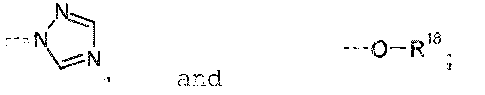 where
in each case R⁵, R⁶, R⁷ and R⁸, independently of the others, is an alkyl or cycloalkyl or aryl or aralkyl or arylalkyl group,
or R⁵ together with R⁶, or R⁷ together with R⁸, forms a portion of an optionally substituted 4- to 7-membered ring;
in each case R⁹, R^{9'}, and R¹⁰, independently of the others, is an alkyl or aralkyl or aryl or arylalkyl group, or is an alkyloxy or aryloxy or aralkyloxy group;
R¹¹ is an alkyl group,
in each case R¹², R¹³, and R¹⁴, independently of the others, is an alkylene group having from 2 to 5 carbon atoms and, if appropriate, having double bonds or substitution, or is a phenylene group, or is a hydrogenated phenylene group;
in each case R¹⁵, R¹⁶, and R¹⁷, independently of the others, is H, or is an alkyl group, or is an aryl group or an aralkyl group; and
R¹⁸ is an aralkyl group or is a mono- or polynuclear substituted or unsubstituted aromatic group which, if appropriate, has aromatic hydroxy groups.

3. End-capped polyurethane prepolymer according to either of the preceding claims, **characterized in that** the polyurethane prepolymer **PU1** is produced from at least one diisocyanate or triisocyanate, and also
from a polymer **Q_{PM}** having terminal amino, thiol, or hydroxy groups;
and/or
from a polyphenol **Q_{PP}** which if appropriate has substitution.

4. Heat-curable epoxy resin composition comprising
- at least one epoxy resin **A** having an average of more than one epoxide group per molecule;
- at least one end-capped polyurethane prepolymer of the formula (I) according to any of Claims 1 to 3,
- at least one hardener **B** for epoxy resins, where this hardener is activated via an elevated temperature.

5. Heat-curing epoxy resin composition according to Claim 4, **characterized in that** the composition also comprises at least one agent **C** with thixotropic effect, based on urea derivative in a carrier material, in particular in an amount of from 0 to 40% by weight, based on the weight of the composition.

6. Heat-curing epoxy resin composition according to either of Claims 4 or 5, **characterized in that** the composition also comprises a liquid rubber **D,** which is preferably a carboxy- or epoxide-terminated polymer, in particular a carboxy- or epoxide-terminated acrylonitrile/butadiene copolymer, in particular in an amount of from 1 to 35% by weight, based on the weight of the composition.

7. Heat-curing epoxy resin composition according to any of Claims 4 to 6, **characterized in that** the composition also comprises a solid toughener **E,** in particular in an amount of from 0.1 to 15% by weight, in particular from 0.5 to 8% by weight, based on the weight of the composition.

8. Heat-curing epoxy resin composition according to any of Claims 4 to 7, **characterized in that** the epoxy resin composition comprises at least one blowing agent, in particular in an amount of from 0.1 to 3% by weight, based on the weight of the composition.

9. Heat-curing epoxy resin composition according to any of Claims 4 to 8, **characterized in that** the proportion of the end-capped polyurethane prepolymer of the formula (I) is from 1 to 45% by weight, in particular from 3 to 30% by weight, based on the weight of the composition.

10. Use of the end-capped polyurethane prepolymer of the formula (I) according to any of Claims 1 to 3 as impact modifier, in particular in epoxy-resin-based compositions.

11. Process for the production of a heat-curing epoxy resin composition according to any of Claims 4 to 9, **characterized in that** the end-capped polyurethane prepolymer of the formula (I) results from a sequential reaction, where, in a first step, a partially capped polyurethane prepolymer of the formula (IVa) or (IVb) is formed from the linear or branched polyurethane prepolymer **PU1** terminated by isocyanate groups and from the compound R²H or, respectively, R³H; 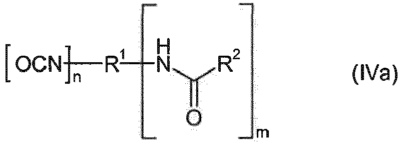 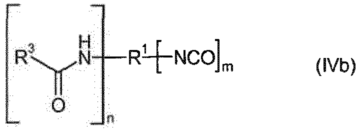 and then, in the second step, this intermediate of the formula (IVa) containing NCO groups is reacted with R³H, or, respectively, this intermediate of the formula (IVb) containing NCO groups is reacted with R²H, to give the end-capped polyurethane prepolymer of the formula (I).

12. Use of a heat-curing epoxy resin composition according to any of Claims 4 to 9 as single-component heat-curing adhesive, in particular as heat-curing bodyshell adhesive in vehicle construction.

13. Process for the adhesive bonding of heat-resistant materials, in particular of metals, **characterized in that** these materials are brought into contact with a heat-curing epoxy resin composition according to any of Claims 4 to 9, and the process encompasses one or more steps of hardening at a temperature of from 100 to 220°C, preferably from 120 to 200°C.

14. Adhesive-bonded item which is obtained via a process according to Claim 13.

## Revendications

1. Prépolymère de polyuréthane bloqué aux extrémités de formule (I) 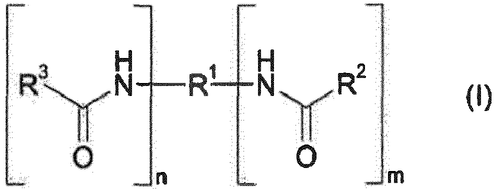 dans laquelle
R¹ représente un prépolymère de polyuréthane linéaire ou ramifié terminé avec n+m groupes isocyanate **PU1** après l'élimination de tous les groupes isocyanate terminaux ; les R² représentent indépendamment les uns des autres un groupe de formule (II) 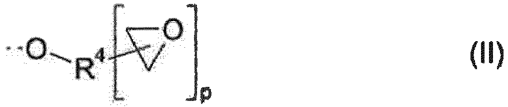 et
les R³ représentent indépendamment les uns des autres un groupe de blocage, qui est clivé à une température supérieure à 100 °C, R⁴ représentant un radical d'un époxyde aliphatique, cycloaliphatique, aromatique ou araliphatique contenant un groupe hydroxyle primaire ou secondaire après l'élimination des groupes hydroxyde et époxyde ;
p = 1, 2 ou 3 ;
n et m représentent des valeurs comprises entre 1 et 7, à condition que 2 ≤ (m+n) ≤ 8 et que R² soit différent de R³.

2. Prépolymère de polyuréthane bloqué aux extrémités de formule (I) selon la revendication 1, dans lequel R³ représente un radical qui est choisi dans le groupe constitué par : 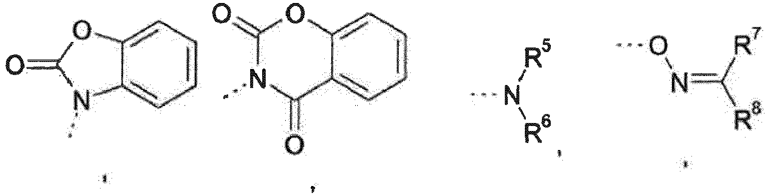 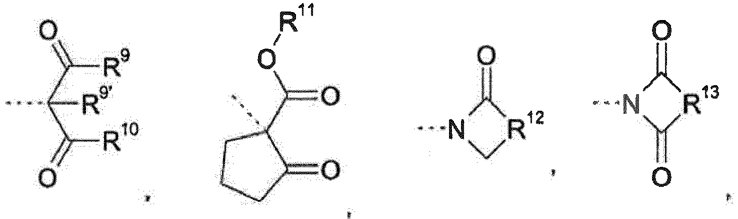 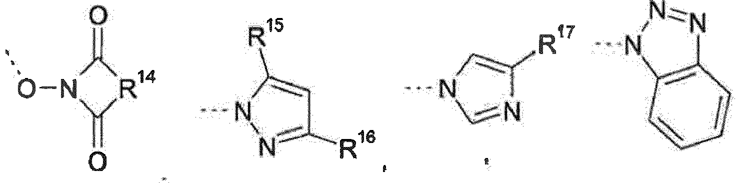 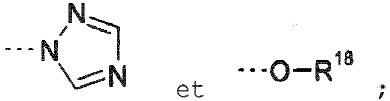
R⁵, R⁶, R⁷ et R⁸ représentant chacun indépendamment les uns des autres un groupe alkyle ou cycloalkyle ou aryle ou aralkyle ou arylalkyle,
ou R⁵ formant avec R⁶, ou R⁷ avec R⁸, une partie d'un cycle de 4 à 7 éléments, qui est éventuellement substitué ;
R⁹, R^{9'} et R¹⁰ représentant chacun indépendamment les uns des autres un groupe alkyle ou aralkyle ou aryle ou arylalkyle ou un groupe alkyloxy ou aryloxy ou aralkyloxy ;
R¹¹ représentant un groupe alkyle,
R¹², R¹³ et R¹⁴ représentant chacun indépendamment les uns des autres un groupe alkylène de 2 à 5 atomes C, qui comprend éventuellement des doubles liaisons ou est substitué, ou un groupe phénylène ou un groupe phénylène hydrogéné ;
R¹⁵, R¹⁶ et R¹⁷ représentant chacun indépendamment les uns des autres H ou un groupe alkyle ou un groupe aryle ou un groupe aralkyle ; et
R¹⁸ représentant un groupe aralkyle ou un groupe aromatique mono- ou polynucléaire substitué ou non substitué, qui comprend éventuellement des groupes hydroxyle aromatiques.

3. Prépolymère de polyuréthane bloqué aux extrémités selon l'une quelconque des revendications précédentes, **caractérisé en ce que** le prépolymère de polyuréthane **PU1** est fabriqué à partir d'au moins un diisocyanate ou triisocyanate, et
à partir d'un polymère **Q_{PM}** contenant des groupes amino, thiol ou hydroxyle terminaux ;
et/ou
à partir d'un polyphénol éventuellement substitué **Q_{PP}.**

4. Composition de résine époxyde durcissable à la chaleur, contenant :
- au moins une résine époxyde **A** contenant en moyenne plus d'un groupe époxyde par molécule ;
- au moins un prépolymère de polyuréthane bloqué aux extrémités de formule (I) selon l'une quelconque des revendications 1 à 3,
- au moins un durcisseur **B** pour résines époxydes, qui est activé par une température élevée.

5. Composition de résine époxyde durcissant à la chaleur selon la revendication 4, **caractérisée en ce que** la composition contient en outre au moins un agent thixotropique **C** à base d'un dérivé d'urée dans un matériau support, notamment en une quantité de 0 à 40 % en poids, par rapport au poids de la composition.

6. Composition de résine époxyde durcissant à la chaleur selon la revendication 4 ou 5, **caractérisée en ce que** la composition contient en outre un caoutchouc liquide **D,** qui est de préférence un polymère à terminaison carboxyle ou époxyde, notamment un copolymère d'acrylonitrile/butadiène à terminaison carboxyle ou époxyde, notamment en une quantité de 1 à 35 % en poids, par rapport au poids de la composition.

7. Composition de résine époxyde durcissant à la chaleur selon l'une quelconque des revendications 4 à 6, **caractérisée en ce que** la composition contient en outre un agent d'amélioration de la résistance solide **E,** notamment en une quantité de 0,1 à 15 % en poids, notamment de 0,5 à 8 % en poids, par rapport au poids de la composition.

8. Composition de résine époxyde durcissant à la chaleur selon l'une quelconque des revendications 4 à 7, **caractérisée en ce que** la composition de résine époxyde contient au moins un agent gonflant, notamment en une quantité de 0,1 à 3 % en poids, par rapport au poids de la composition.

9. Composition de résine époxyde durcissant à la chaleur selon l'une quelconque des revendications 4 à 8, **caractérisée en ce que** la proportion du prépolymère de polyuréthane bloqué aux extrémités de formule (I) est de 1 à 45 % en poids, notamment de 3 à 30 % en poids, par rapport au poids de la composition.

10. Utilisation du prépolymère de polyuréthane bloqué aux extrémités de formule (I) selon l'une quelconque des revendications 1 à 3 en tant que modificateur de la résistance aux impacts, notamment dans des compositions à base de résine époxyde.

11. Procédé de fabrication d'une composition de résine époxyde durcissant à la chaleur selon l'une quelconque des revendications 4 à 9, **caractérisé en ce que** le prépolymère de polyuréthane bloqué aux extrémités de formule (I) est obtenu par une réaction séquentielle ; lors d'une première étape, un prépolymère de polyuréthane partiellement bloqué de formule (IVa) ou (IVb) étant formé à partir du prépolymère de polyuréthane linéaire ou ramifié terminé par des groupes isocyanate **PU1** et du composé R²H ou R³H ; 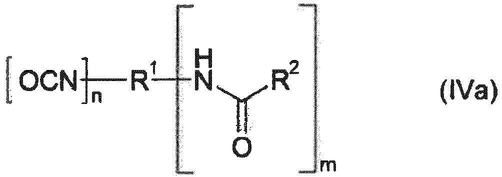 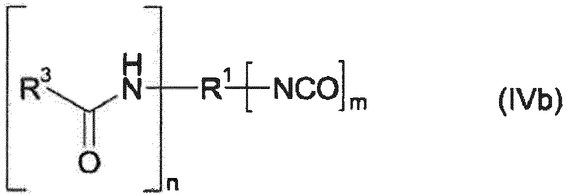 et lors de la deuxième étape, ce produit intermédiaire contenant des groupes NCO de formule (IVa) étant ensuite mis en réaction avec R³H ou ce produit intermédiaire contenant des groupes NCO de formule (IVb) étant ensuite mis en réaction avec R²H, pour former le prépolymère de polyuréthane bloqué aux extrémités de formule (I).

12. Utilisation d'une composition de résine époxyde durcissant à la chaleur selon l'une quelconque des revendications 4 à 9 en tant qu'adhésif monocomposant durcissant à la chaleur, notamment en tant qu'adhésif de gros oeuvre durcissant à la chaleur dans la construction de véhicules.

13. Procédé de collage de matériaux stables à la chaleur, notamment de métaux, **caractérisé en ce que** ces matériaux sont mis en contact avec une composition de résine époxyde durcissant à la chaleur selon l'une quelconque des revendications 4 à 9, et le procédé comprend une ou plusieurs étapes de durcissement à une température de 100 à 220 °C, de préférence de 120 à 200 °C.

14. Article collé, qui est obtenu par un procédé selon la revendication 13.
